# EUROPEAN PATENT APPLICATION

(11) **EP 4 776 461 A1**
(43) Date of publication of application: **15.07.2026**
(21) Application number: 24862425.6
(22) Date of filing: 03.07.2024
(51) Int. Cl.: H02J 3/46, H02J 3/00, H02J 3/14, H02J 3/38

(54) **ELECTRIC POWER INTERCHANGE SYSTEM**

(30) Priority: 08.09.2023 JP 2023146024
(71) Applicant: Hitachi, Ltd., Tokyo 100-8280 (JP)
(72) Inventor: TSUNODA, Jun, Tokyo 100-8280 (JP); KOUNO, Toru, Tokyo 100-8280 (JP)
(74) Representative: MERH-IP Matias Erny Reichl Hoffmann Patentanwälte PartG mbB
(86) International application number: PCT/JP2024/024023
(87) International publication number: WO 2025/052768

(57) **Abstract**

An object of the present invention is to appropriately set a margin of power demand prediction used when calculating transmitted power in a power interchange system that transmits power generated in a power generation base to a demand base by a power transmission network. When a difference between demand prediction and actual demand does not fall within a range of allowable difference, the power interchange system according to the present invention determines a correction value for the demand prediction in accordance with the absolute value of the difference, and applies the determined correction value to the demand prediction (refer to Fig. 13).

## Description

### Technical Field

The present invention relates to a technique for transmitting power generated in a power generation base to a demand base by a power transmission network.

### Background Art

In the power self-consignment, when a company or the like having a power generation facility transmits power generated by the power generation facility between bases, a power transmission network of the power company is used. When performing the power self-consignment, it is necessary to submit a power transmission plan to an operating organization (for example, organization for cross-regional coordination of transmission operators: OCCTO) before starting the dispatch (for example, the day before). Further, during the power self-consignment, it is necessary to transmit power as planned in advance at predetermined time intervals (for example, 30 minutes). If the actual transmitted power deviates from the preliminary plan (imbalance), a penalty is generally imposed. The power transmitted from the power generation base to the demand base may be referred to as interchange power.

In order to "enable power distribution to multiple power consumers, including those with distributed power sources within a given area (community), and power supply and demand between these consumers at low cost, thereby stabilizing the power system", JP 2002-010500 A listed below discloses a technique of including "an energy storage facility 6h that stores energy input to or output from a distributed power source 4 installed in one of multiple power consumers 3a to 3n within community C; and a power demand control device 6d that distribute a predetermined amount of power purchased through a power trading device and the total amount of power generated by all distributed power sources 4 within the community C to the power consumers within the community C according to their respective power demands, and when there is a discrepancy between the total power demand and the total power supply during this distribution, controls the operation of the distributed power sources 4 via a distributed power source control device such that the supply and demand of power is adjusted to eliminate the discrepancy.

In order to "provide a power control system that is capable of complying with regulations and keeping a difference between supply and demand at predetermined time intervals within an allowable error that complies with the regulations", JP 2017-175786 A discloses a technique of "a power control system that controls the difference between the amount of power demanded and supplied in a service area at each predetermined time interval to within an allowable value, based on regulations, the power control system including: a power transmission network that supplies power to consumers within a service area; individual power generating units installed at locations of the consumers within the service area; a calculation unit that calculates the amount of power demanded and supplied for each predetermined time period regarding the consumers; and a control unit that controls the operation of the individual power generating units, in which the calculation unit compares an actual usage amount in a predetermined time period regarding the consumers with a predicted demand amount, and in a case where the actual usage amount is lower than the predicted demand amount, the control unit increases the power consumption of the consumers, and in a case where the actual usage amount exceeds the predicted demand amount, the control unit operates the individual power generating units to supply the consumers with the shortage of power.

### Citation List

### Patent Literature

Patent Literature 1: JP 2002-010500 A
Patent Literature 2: JP 2017-175786 A

### Summary of Invention

### Technical Problem

The power to be wheeled can be calculated by subtracting a prediction value of the power demand in the power generation base from the prediction value of the power generation amount by the power generation facility, and multiplying the prediction value of the power demand in the demand base by the reserve power coefficient as necessary. Therefore, when calculating the power to be wheeled, it is desirable to accurately predict the power demand in the demand base.

In the power interchange, when the power transmitted from the power generation base to the demand base cannot be consumed in the demand base, a large penalty charge may be imposed. On the other hand, in recent consumers, there is a case where a power demand tendency greatly fluctuates along with an electric/automation of transportation facility and introduction of a private power generation facility. In addition, a sudden event such as a sudden temperature change or an operation plan change of a private power generation facility may cause a large deviation in demand prediction. Therefore, there is a high possibility that the power transmitted from the power generation base to the demand base cannot be consumed in the demand base and a penalty charge is imposed.

In view of the above circumstances, it is considered desirable to secure a certain margin for the demand prediction in the power generation base. In the prior art such as JP 2002-010500 A and JP 2017-175786 A, such a margin of demand prediction has not been sufficiently studied. This is thought to be because the possibility that the interchange power cannot be consumed at the demand base is not sufficiently considered.

The present invention has been made in view of the above problems, and an object of the present invention is to appropriately set a margin of power demand prediction used when calculating transmitted power in a power interchange system that transmits power generated in a power generation base to a demand base by a power transmission network.

### Solution to Problem

When a difference between demand prediction and actual demand does not fall within the range of the allowable difference, the power interchange system according to the present invention determines a correction value for the demand prediction in accordance with the absolute value of the difference, and applies the determined correction value to the demand prediction.

### Advantageous Effects of Invention

According to the power interchange system according to the present invention, it is possible to appropriately set a margin of power demand prediction used when calculating transmitted power in a power interchange system that transmits power generated in a power generation base to a demand base by a power transmission network. Problems, configurations, effects, and the like other than the above will be apparent from the following description of embodiments.

### Brief Description of Drawings

Fig. 1 is a configuration diagram of a power interchange system according to a first embodiment;
Fig. 2A is a diagram for explaining a process of learning a learning model stored in a storage unit 13;
Fig. 2B is a diagram for explaining a process of predicting power demand using a learned learning model;
Fig. 3 is a diagram illustrating a procedure for evaluating prediction accuracy of the learning model;
Fig. 4 is a diagram illustrating a result of evaluating the prediction accuracy of the learning model;
Fig. 5 is a diagram illustrating an error between a prediction value and an actual value of power demand in 24 hours;
Fig. 6 is a table for explaining an allowable difference;
Fig. 7 illustrates an example of an allowable difference table stored in the storage unit 13;
Fig. 8 is a diagram illustrating a temporal change in an allowable difference;
Fig. 9 is a diagram for explaining a divergence degree;
Fig. 10 is a diagram for explaining a procedure in which an error calculation unit 112 calculates the divergence degree;
Fig. 11 is an example of divergence degree data;
Fig. 12 is a diagram for explaining a demand margin;
Fig. 13 is a diagram illustrating a state of adjusting the demand margin;
Fig. 14 is a conceptual diagram illustrating a state in which an error falls within a range of an allowable difference depending on the demand margin;
Fig. 15 is a flowchart illustrating a procedure for adjusting a demand margin by a calculation unit 11;
Fig. 16 is an example of a user interface provided by the calculation unit 11;
Fig. 17 is a diagram for explaining a divergence degree in the power interchange system according to a second embodiment;
Fig. 18 is a flowchart illustrating a procedure for adjusting a demand margin by a calculation unit 11 in the second embodiment;
Fig. 19 is a diagram for explaining a divergence degree in the power interchange system according to a third embodiment; and
Fig. 20 is a flowchart illustrating a procedure in which the calculation unit 11 determines a demand margin in each demand base in third embodiment.

### Description of Embodiments

### First Embodiment

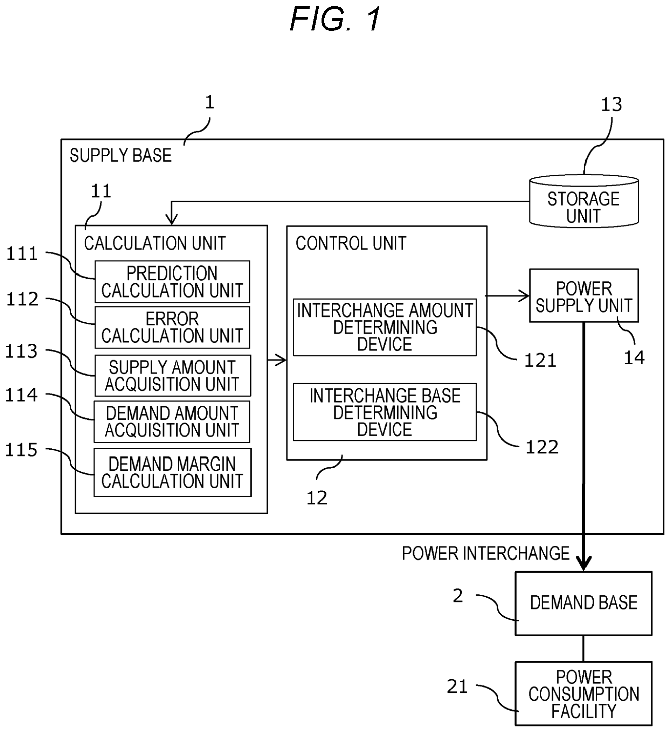

Fig. 1 is a configuration diagram of a power interchange system according to a first embodiment of the present invention. The power interchange system is a system that transmits power generated by a supply base 1 to a demand base 2 via a power transmission network. The demand base 2 includes a power consumption facility 21 that consumes power. The supply base 1 includes a calculation unit 11, a control unit 12, a storage unit 13, and a power supply unit 14.

The calculation unit 11 sets a margin for the prediction value of the power demand in the demand base. Specific examples will be described later. The calculation unit 11 includes a prediction calculation unit 111, an error calculation unit 112, a supply amount acquisition unit 113, a demand amount acquisition unit 114, and a demand margin calculation unit 115. Operations of these functional units will be described later.

The control unit 12 includes an interchange amount determining device 121 and an interchange base determining device 122. The interchange amount determining device 121 determines power to be transmitted to the demand base 2 based on a power demand prediction value corrected using the demand margin set by the calculation unit 11. When there are a plurality of demand bases 2, the interchange base determining device 122 determines a power transmission destination among the plurality of demand bases 2.

The storage unit 13 stores a learning model in which machine learning is performed in advance so as to predict the power demand in the demand base 2. In addition, the storage unit 13 stores data describing an allowable difference to be described later. The power supply unit 14 transmits the power generated in the supply base 1 to the demand base 2.

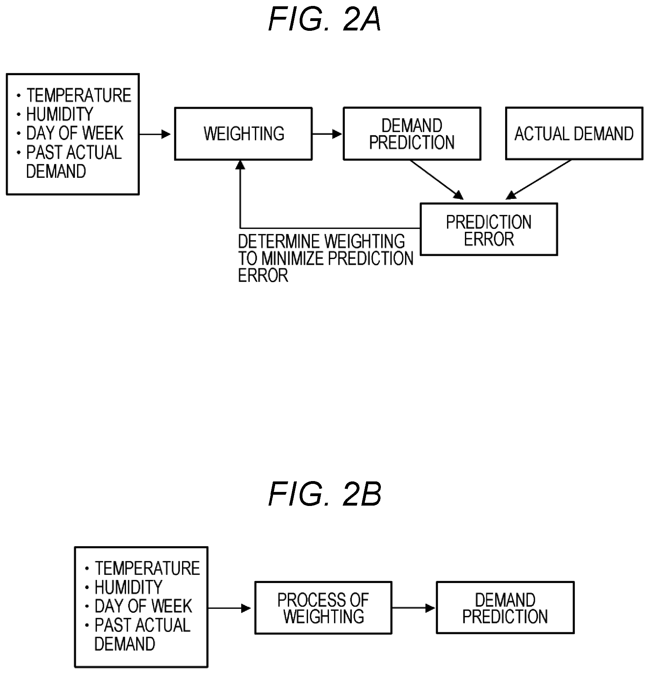

Fig. 2A is a diagram for explaining a process of learning a learning model stored in the storage unit 13. The prediction calculation unit 111 inputs data describing past parameters (parameters that may affect demand prediction, such as temperature, humidity, day of the week, and past actual demands) in the demand base 2 to the learning model. The learning model calculates a prediction value of the power demand by weighting the input data. The prediction calculation unit 111 calculates the prediction error by comparing the prediction value and the actual value of the power demand. The prediction calculation unit 111 updates the weighting so as to minimize the prediction error. The learning model can be learned by this repetition. As the learning algorithm, for example, a known technique of recognition such as back propagation can be used.

Fig. 2B is a diagram for explaining a process of predicting power demand using a learned learning model. The prediction calculation unit 111 inputs the same data as that in Fig. 2A on the day on which the prediction is performed to the learning model. The learning model calculates a prediction value of the power demand by weighting the input data. The prediction calculation unit 111 acquires the prediction value.

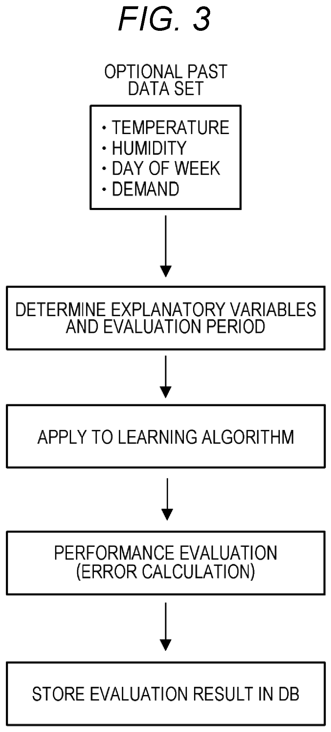

Fig. 3 is a diagram illustrating a procedure for evaluating prediction accuracy of the learning model. The error calculation unit 112 performs evaluation according to this procedure using past weather data and actual power demand. First, an explanatory variable of an evaluation result and an evaluation period are determined. Evaluation is performed by inputting evaluation target data to the learning model and calculating an error between the prediction value and the actual value over the evaluation period. The evaluation result is stored in the storage unit 13. The explanatory variable is a data item of learning data input to the learning model when the learning model is learned. The evaluation period is a period in which data suitable for use as learning data can be obtained, and is, for example, a period of "convergence 1" to be described later.

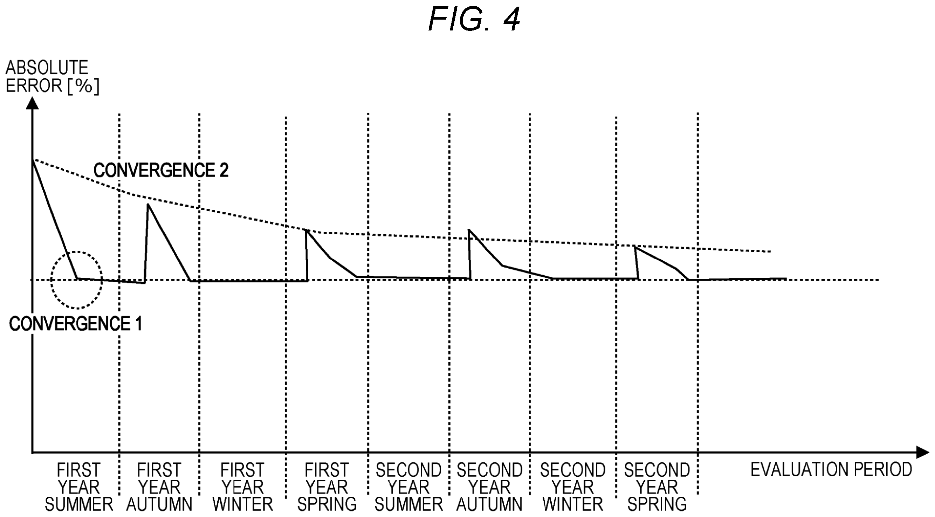

Fig. 4 is a diagram illustrating a result of evaluating the prediction accuracy of the learning model. The absolute error between the prediction value and the actual value of the power demand converges within a certain range during the evaluation period. The absolute error after the convergence is set to "convergence 1" in Fig. 4. On the other hand, there is a case where the absolute error temporarily increases within the evaluation period. In particular, there is such a tendency in a demand base where power demand greatly fluctuates due to the above-described circumstances. The temporarily increased absolute error is referred to as "convergence 2" in Fig. 4.

The convergence 2 also converges within a certain range in the long term. The fact that a peak of the convergence 2 gradually decreases in Fig. 4 indicates this. However, although it gradually decreases in the long term, it is not desirable to use the convergence 2 in order to always ensure the accuracy of the demand prediction. Therefore, the measurement data that can be used to predict the power demand in such a demand base is practically only the convergence 1. That is, in the demand base where the power demand greatly fluctuates, data that can be used as basic data used for demand prediction is limited.

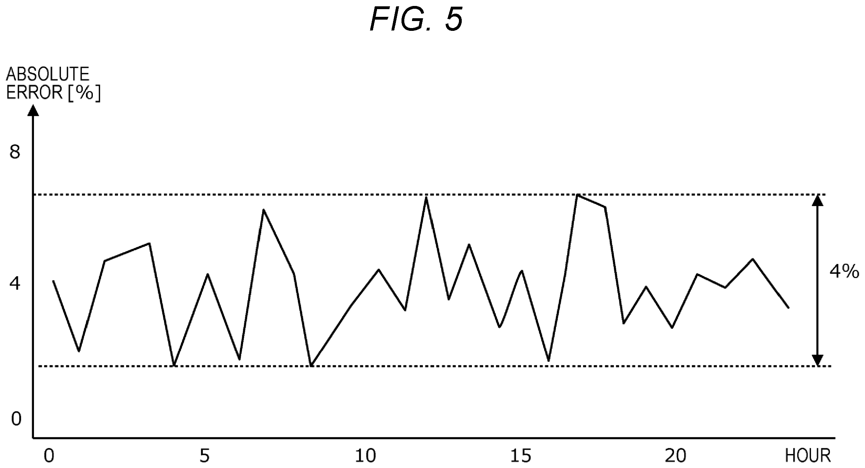

Fig. 5 is a diagram illustrating an error between a prediction value and an actual value of power demand in 24 hours. The absolute difference between the upper limit and the lower limit of the error is defined as an absolute error. In addition to the long-term convergence tendency of the error as described in Fig. 4, an error range of the power demand prediction tends to greatly depend on the demand base.

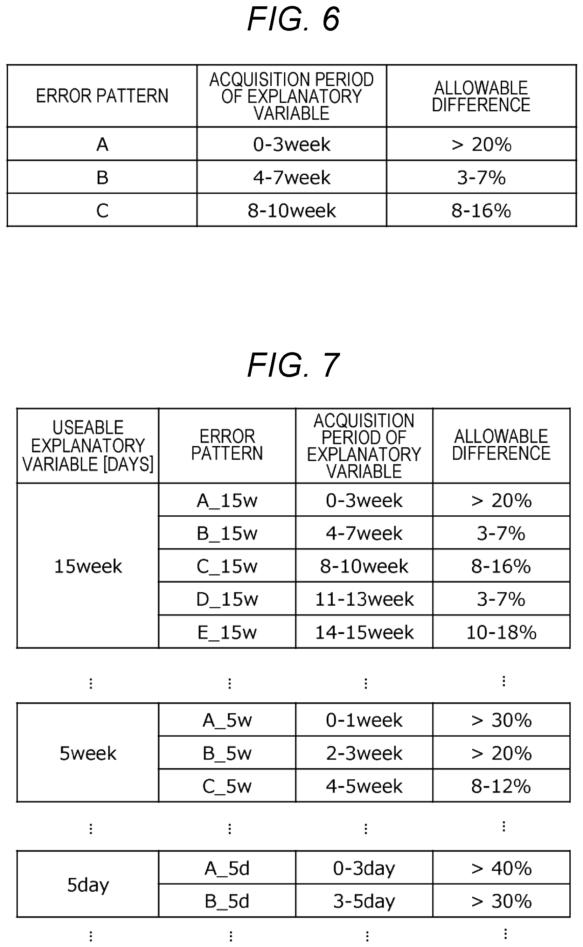

Fig. 6 is a table for explaining an allowable difference. In the demand base where the power demand greatly fluctuates, the period suitable for acquiring the data (that is, the explanatory variable) input to the learning model is limited as described in Fig. 4. Here, it is assumed that data for 10 weeks is acquired.

Since the learning result has not sufficiently converged in the initial 3 weeks of the 10 weeks, it is originally assumed that the error between the prediction value and the actual value is large. Therefore, the allowable difference allowed as the error in this period is a slightly large value (20% or more in this example). In the next 4 weeks (4 to 7 weeks), since it is assumed that the learning results have sufficiently converged, the allowable difference is set to be small (3% to 7% in this example). The error does not necessarily decrease as the usable data amount increases, and the error may conversely increase as in the "convergence 2" described in Fig. 4, for example. This is the case for the last 2 weeks (8 to 10 weeks) and the allowable difference is slightly increasing.

Fig. 7 illustrates an example of an allowable difference table stored in the storage unit 13. Since the allowable difference described in Fig. 6 tends to be different for each period length (that is, the period length of the usable explanatory variable) in which data suitable for being input to the learning model can be acquired, the allowable difference table also defines the allowable difference for each period length. Here, data examples in cases where the period length is 15 weeks, 5 weeks, and 5 days are shown. The structure of data in each period length is similar to that in Fig. 6.

The allowable difference table can be created by calculating an error between the demand prediction and the actual demand over the acquisition period of the explanatory variable, and determining an allowable difference for the error for each period (for example, in a case where the acquisition period is 15 weeks, Fig. 7 illustrates each period of each of patterns A to E.) within the acquisition period. The error may be calculated by the calculation unit 11 or may be calculated by other appropriate means. The allowable difference can be determined in consideration of a temporary error increase such as the convergence 2 while being determined to decrease as time elapses within the acquisition period in principle. The calculation unit 11 may determine the allowable difference according to these rules, or the user may determine the allowable difference by manual work.

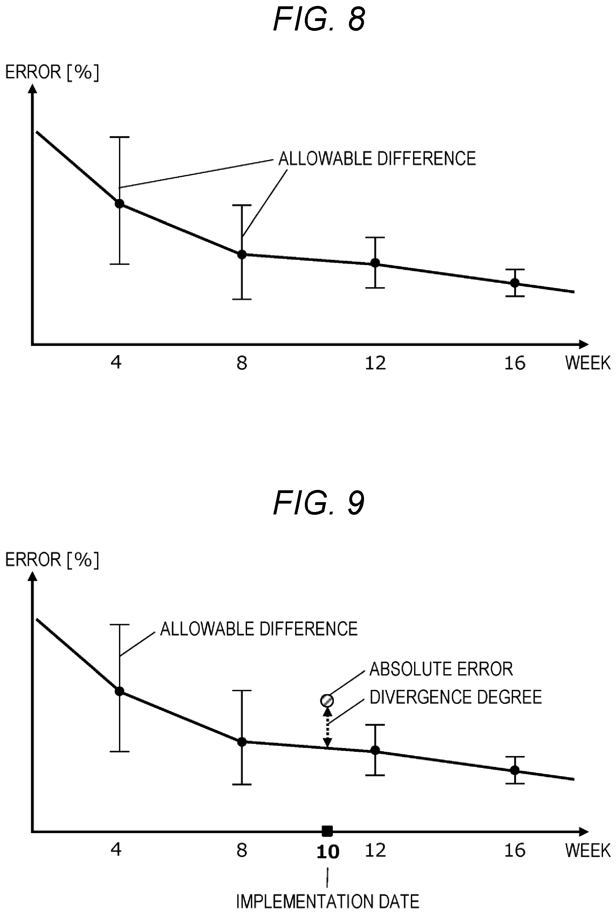

Fig. 8 is a diagram illustrating a temporal change in an allowable difference. It is assumed that the error between the prediction value and the actual value of the power demand decreases with time. Therefore, an allowable difference allowed as an error between the two gradually decreases as the period elapses. Since the allowable difference is a value having a range, as illustrated in Fig. 8, the allowable difference at each time point has a numerical range at that time point. Both a median value of the allowable difference and a range of the allowable difference itself gradually decrease as the period elapses. However, in a period in which the error temporarily increases like the "convergence 2", the allowable difference may also temporarily increase.

Fig. 9 is a diagram for explaining a divergence degree. The error calculation unit 112 calculates an absolute value (absolute error) of the error between the prediction value and the actual value of the power demand on a specific day (implementation day in Fig. 9). The error calculation unit 112 further specifies a median value of the allowable difference on the same day (an average of the upper limit and the lower limit of the allowable difference). The error calculation unit 112 calculates the absolute difference between the absolute error and the median value as the divergence degree. The use of the divergence degree will be described later.

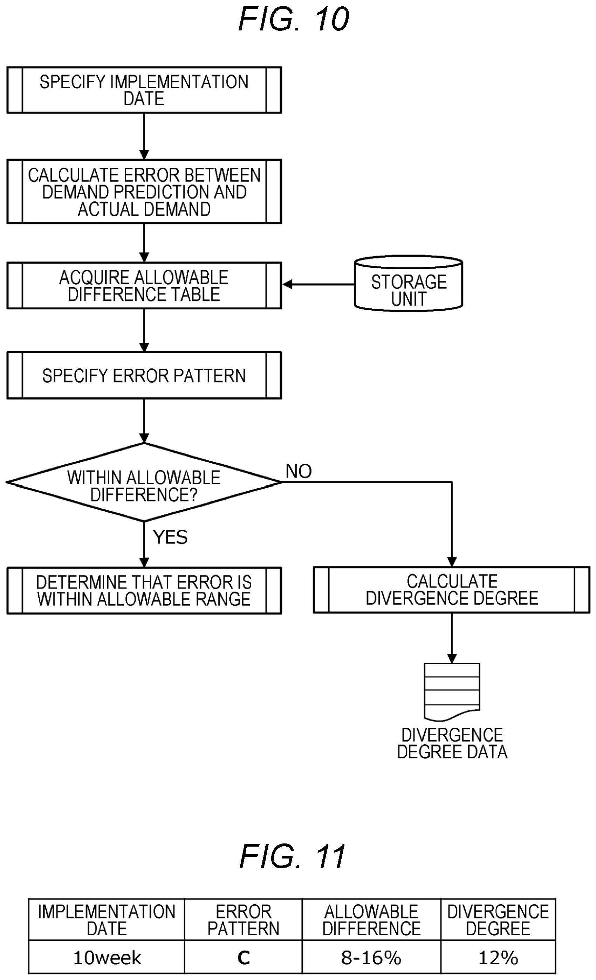

Fig. 10 is a diagram for explaining a procedure in which the error calculation unit 112 calculates the divergence degree. First, the implementation date described in Fig. 9 is specified, and an error between the prediction value and the actual value of the power demand on that day is calculated. The allowable difference table described in Fig. 7 is acquired from the storage unit 13. The error calculation unit 112 specifies which error pattern in an allowable error table the calculated error corresponds to. For example, the error pattern can be specified using an elapsed period from a time point at which acquisition of data to be input to the learning model is started (example: if the period during which the explanatory variable can be used is 15 weeks and the implementation date is the 9 week, the error pattern C_15w). The error calculation unit 112 determines whether an error is included within a range of an allowable difference of the specified error pattern. When the error is out of the range of the allowable difference, the divergence degree is calculated by the procedure described with reference to Fig. 9.

Fig. 11 is an example of divergence degree data. The error calculation unit 112 stores the divergence degree calculated by the procedure of Fig. 10 in the storage unit 13 as the divergence degree data. The divergence degree data can be described by further adding the divergence degree in a format similar to the allowable difference table.

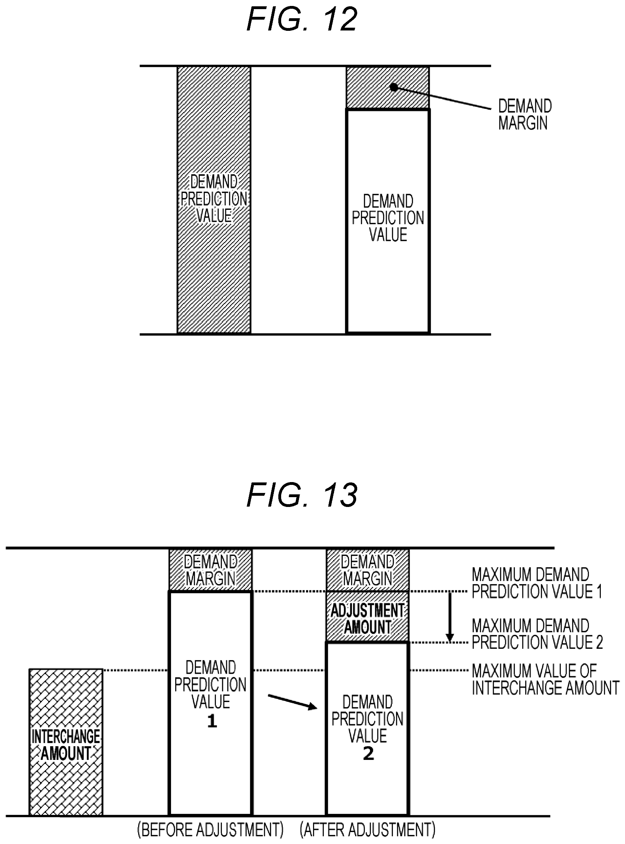

Fig. 12 is a diagram for explaining a demand margin. The power interchange system determines power to be transmitted to the demand base 2 based on the power demand prediction value. However, a slight margin is subtracted from the demand prediction value so that the interchange power can be reliably consumed in the demand base 2 instead of using the demand prediction value as it is, and the transmission power is determined based on the demand amount after the subtraction.

Fig. 13 is a diagram illustrating how the demand margin is adjusted. The demand margin calculation unit 115 sets the demand margin described with reference to Fig. 12, for example, by multiplying the demand prediction value by a predetermined ratio. When the demand prediction value after subtracting the demand margin is not within the range of the allowable difference, the demand margin calculation unit 115 further adjusts the demand margin to make the demand prediction value fall within the range of the allowable difference.

Specifically, the demand margin can be adjusted as follows. First, in order to reliably consume the power transmitted from the supply base 1 in the demand base 2, the maximum value of the power demand in the period in which the interchange is performed needs to be larger (or the same value) than the maximum value of the interchange power in the period in which the interchange is performed. Therefore, the demand margin is determined such that the maximum value of the demand prediction value during the period is larger than the maximum value of the interchange power during the period. Then, the demand margin is adjusted so that the error between the demand prediction and the actual demand falls within the range of the allowable difference corresponding to the period (that is, the error is adjusted to be equal to or less than the upper limit value of the allowable difference). As long as these conditions are satisfied, the amount of adjustment of the demand margin may be optional. Through these adjustments, it is possible to keep the error within the range of the allowable difference while maintaining the possibility that the demand base 2 can consume the interchange power more than before applying the correction value.

In a case where the demand prediction value is lower than the interchange power (or the same value), when power is transmitted to the demand base 2, there is a possibility that the power cannot be consumed in the demand base 2. Therefore, in such a case, it is desirable to set the interchange power to 0 or set the interchange power to a small value less than or equal to the reference value, which is highly likely to be consumed in the demand base 2.

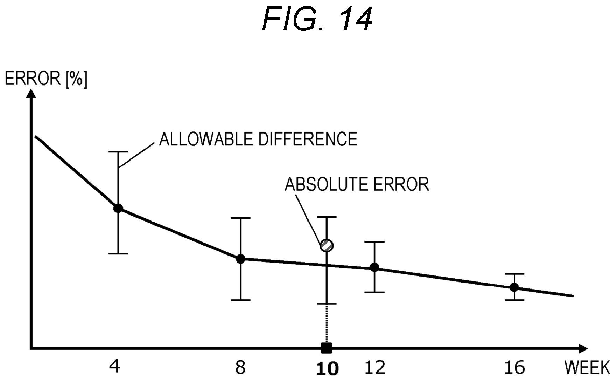

Fig. 14 is a conceptual diagram illustrating a state in which an error falls within a range of an allowable difference depending on the demand margin. In general, the larger the absolute error deviates from the median value of the allowable difference (that is, the larger the divergence degree), the larger the adjustment amount of the demand margin needs to be.

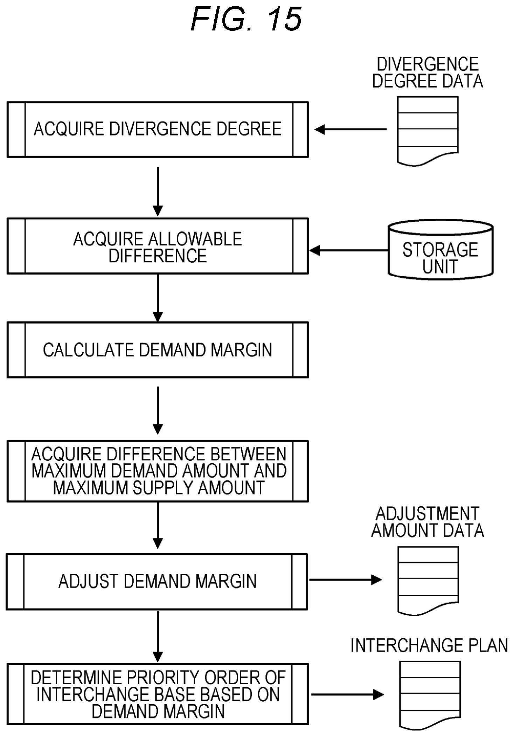

Fig. 15 is a flowchart illustrating a procedure for adjusting a demand margin by the calculation unit 11. The demand margin calculation unit 115 acquires the divergence degree calculated by the error calculation unit 112 and the allowable difference in the period from the storage unit 13. The demand margin calculation unit 115 calculates an initial value of the demand margin based on, for example, the magnitude of the demand prediction value. The supply amount acquisition unit 113 and the demand amount acquisition unit 114 respectively acquire the maximum value of the demand prediction value and the maximum value of the interchange power during the period. The demand margin calculation unit 115 adjusts the demand margin according to the procedure described with reference to Fig. 13 and stores the result in the storage unit 13. The interchange base determining device 122 may determine the priority order of the demand base that transmits power, for example, according to a procedure described in a third embodiment to be described later. The interchange amount determining device 121 determines the power to be transmitted to each demand base according to the priority order.

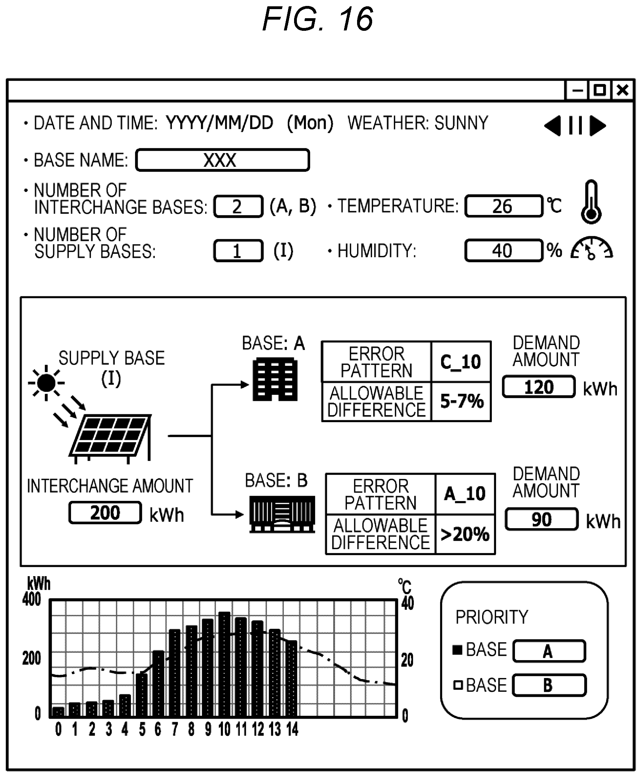

Fig. 16 is an example of a user interface provided by the calculation unit 11. The user interface can present at least one of the parameters acquired by the calculation unit 11 through the above procedure. For example, parameters such as a prediction value of the power demand, an actual value of the power demand, a difference therebetween, an allowable difference, and power to be transmitted to the demand base can be presented. The lower graph of Fig. 16 illustrates the prediction value and the actual value of the power demand and the difference therebetween.

### Second Embodiment

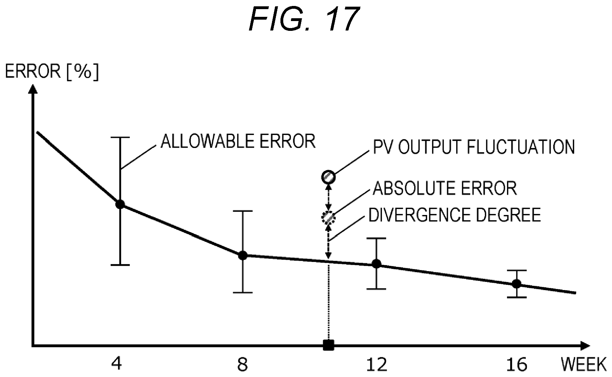

Fig. 17 is a diagram for explaining a divergence degree in the power interchange system according to a second embodiment of the present invention. In the first embodiment (Fig. 9), it has been described that the divergence degree is the absolute difference between the absolute error of the power demand and the median value of the allowable difference. In the second embodiment, it is assumed that the demand base 2 includes a photovoltaic module, and the divergence degree is corrected (or updated) by taking into account the output fluctuation of the photovoltaic module.

The photovoltaic module output can be used to cover the power demand in the demand base 2. Therefore, the prediction value of the power demand needs to be obtained in consideration of the photovoltaic module output. However, since the output of the photovoltaic module fluctuates over time, it is necessary to take into account the fluctuation. That is, the divergence degree described in the first embodiment also needs to be obtained in consideration of the output fluctuation of the photovoltaic module. For example, when the error between the demand prediction value and the demand actual value is calculated, the calculation may be performed after adding the maximum fluctuation range of the photovoltaic module output.

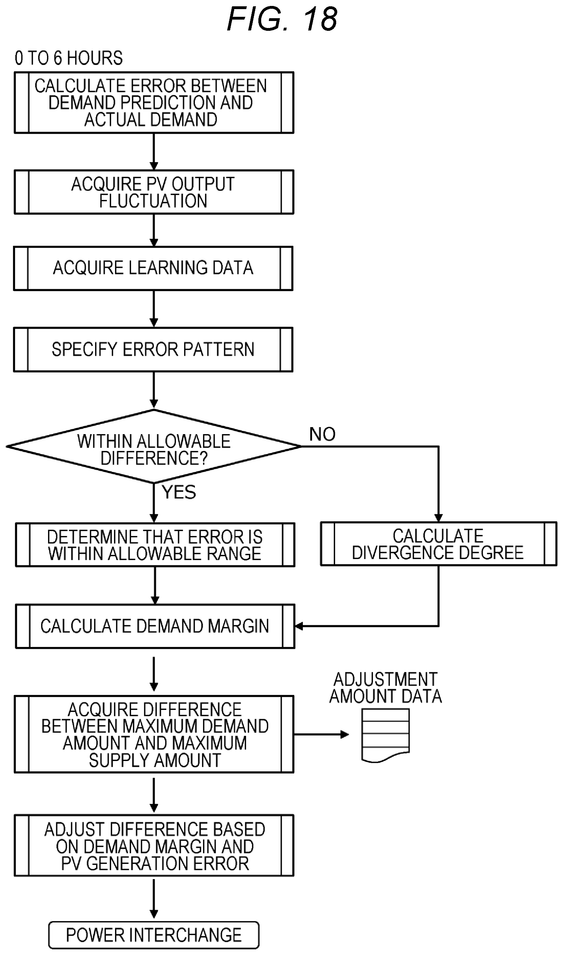

Fig. 18 is a flowchart illustrating a procedure for adjusting a demand margin by the calculation unit 11 in the second embodiment. The calculation unit 11 acquires the output fluctuation range of the photovoltaic module in addition to the procedure described in first embodiment. This value can be acquired from, for example, the history of the output fluctuation range in the past similar weather. The calculation unit 11 recalculates the error (and the divergence degree) by adding the maximum fluctuation range of the photovoltaic module output to the error between the demand prediction and the actual demand. Other procedures are the same as those in the first embodiment.

### Third Embodiment

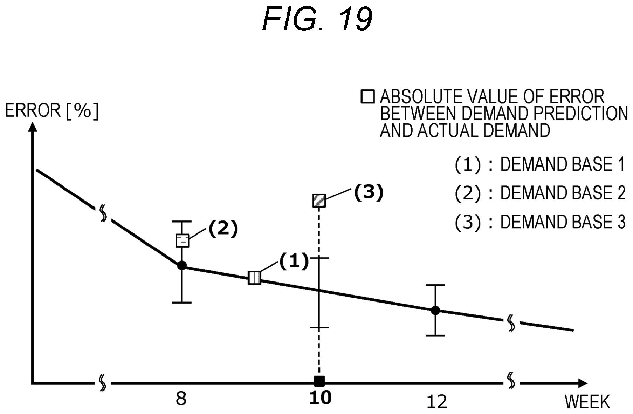

Fig. 19 is a diagram for explaining a divergence degree in the power interchange system according to a third embodiment. When there are a plurality of demand bases 2, the divergence degree can be calculated for each demand base. Fig. 19 illustrates an example in which calculation is performed for each of three demand bases. Since the prediction value and the actual value substantially match in a base (1), the divergence degree is substantially 0%. Since the divergence degree of a base (2) is within the range of the allowable difference, the demand margin also falls within the range. Since the divergence degree exceeds the range of the allowable difference in a base (3), it is necessary to greatly adjust the demand margin.

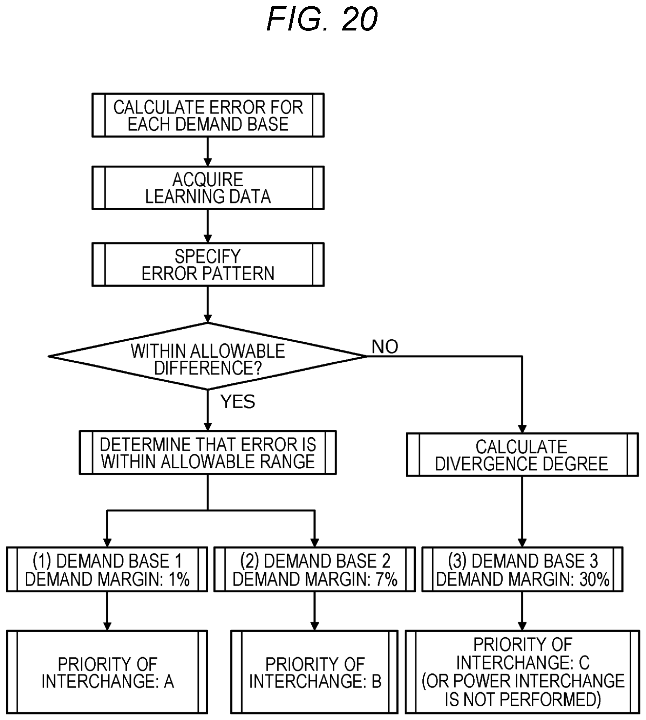

Fig. 20 is a flowchart illustrating a procedure in which the calculation unit 11 determines a demand margin in each demand base in third embodiment. The calculation unit 11 calculates the divergence degree for each demand base in the same manner as in the first embodiment. The calculation unit 11 sets the demand margin to be larger as the divergence degree is larger. In the example described with reference to Fig. 19, the base (1) has the smallest demand margin and the base (3) has the largest demand margin.

The calculation unit 11 may further determine the power transmission destination so as to allocate higher priorities in order from the demand base having a lower divergence degree (or demand margin) and transmit power in order of priority. For example, the following determination procedure is considered: (a) Transmitted power is allocated in order from a demand base having a small divergence degree, and when there is further surplus generated power, the transmitted power is allocated to a demand base having a next small divergence degree. This procedure is repeated until there is no power that can be transmitted. (b) The power to be transmitted to each demand base is determined such that the satisfaction rate with respect to the power demand becomes larger as the divergence degree is smaller. The calculation unit 11 may not perform the power interchange regardless of the demand prediction for the base with low priority (the base with the error exceeding the threshold).

### Modifications of the Present Invention

In addition, the present invention is not limited to the above-described embodiments, and includes various modifications. For embodiment, the above-described embodiments are described in detail in order to describe the present invention in an easy-to-understand manner, and are not necessarily limited to those having all the described configurations. Further, a part of the configuration of one embodiment can be replaced with the configuration of another embodiment, and the configuration of another embodiment can be added to the configuration of one embodiment. Furthermore, it is possible to add, delete, and replace other configurations for a part of the configuration of each embodiment.

In the above embodiments, any known technique can be used as a learning algorithm used by the calculation unit 11 to predict the power demand.

In the above embodiments, when the calculation unit 11 can control the power consumption facility 21 included in the demand base 2, the divergence degree may be caused to fall within the range of the allowable difference. That is, the power consumption may be reduced when the power actual demand exceeds the power demand prediction, and the power consumption may be increased when the prediction exceeds the actual demand.

In the above embodiment, each functional unit (for example, the calculation unit 11, the control unit 12, and the like) included in the supply base 1 can be configured by hardware such as a circuit device in which these functions are mounted, or can be configured by executing software in which these functions are mounted by an arithmetic device such as a central processing unit (CPU).

### Reference Signs List

1: supply base
11: calculation unit
12: control unit
13: storage unit
14: supply unit
2: demand base

## Claims

1. A power interchange system that transmits power generated in a power generation base to a demand base through a power transmission network, the power interchange system comprising:
a calculation unit that predicts power demand in the demand base; and
a storage unit that stores data describing an allowable difference allowed as a difference between a prediction value and an actual value of the power demand,
wherein when the difference does not fall within the range of the allowable difference, the calculation unit determines a correction value for the prediction value according to an absolute value of the difference, and applies the determined correction value to the prediction value to correct the prediction value, and
the calculation unit determines the power to be transmitted to the demand base based on the prediction value corrected using the correction value.

2. The power interchange system according to claim 1, wherein the calculation unit determines, as the correction value, a value from which the prediction value is subtracted when the difference is equal to or larger than an upper limit value of the allowable difference, and
the calculation unit sets the power to be transmitted to the demand base to 0 or a reference value or less when the difference is equal to or less than a lower limit value of the allowable difference.

3. The power interchange system according to claim 1, wherein the calculation unit determines the correction value such that the prediction value becomes larger than the power, thereby increasing a possibility that power demand specified by the prediction value can be consumed in the demand base as compared to before the application of the correction value.

4. The power interchange system according to claim 1, wherein the data describes the allowable difference for each period in a period in which the calculation unit predicts the power demand, and
the calculation unit acquires the allowable difference corresponding to a time point of power transmission to the demand base in the period from the data, and determines the correction value using the acquired allowable difference.

5. The power interchange system according to claim 1, wherein the data is configured by calculating the difference over a predetermined period and determining the allowable difference over the predetermined period based on the calculated difference,
the data defines the allowable difference for each length of the predetermined period, and
the calculation unit acquires the allowable difference corresponding to a length of a target period in which a process of determining the power is performed from the data, and determines the correction value using the acquired allowable difference.

6. The power interchange system according to claim 1, wherein the demand base is configured to generate power using a photovoltaic module, and
the calculation unit recalculates the difference by adding a fluctuation of the power generation amount of the photovoltaic module to the prediction value.

7. The power interchange system according to claim 1, wherein the calculation unit determines a power transmission destination such that the power is transmitted preferentially as the demand base has a smaller difference.

8. The power interchange system according to claim 1, wherein the calculation unit does not transmit the power regardless of the prediction value to the demand base in which the difference exceeds a threshold.

9. The power interchange system according to claim 6, wherein the calculation unit determines the power to be transmitted to each of the two or more demand bases, and the calculation unit determines a power transmission destination so as to transmit the power in order from the demand base having a smaller difference, and to transmit the power to the demand base having the second smallest difference when there is a surplus of power generation amount.

10. The power interchange system according to claim 6, wherein the calculation unit determines the power to be transmitted to each of the two or more demand bases, and the calculation unit determines the power to be transmitted to each of the demand bases in order from the demand base having a smaller difference such that a satisfaction rate with respect to the power demand increases.

11. The power interchange system according to claim 1, wherein the calculation unit provides a user interface, and
the user interface presents at least one of the prediction value, the actual value, the difference, the allowable difference, and the power.

12. The power interchange system according to claim 1, wherein the demand base includes a power consumption facility that consumes the power demand, and
the calculation unit adjusts power consumed by the power consumption facility so that the difference falls within a range of the allowable difference.
